# EUROPEAN PATENT SPECIFICATION

(11) **EP 3 470 310 B1**
(45) Date of publication and mention of the grant of the patent: **29.07.2020**
(21) Application number: 18199070.6
(22) Date of filing: 08.10.2018
(51) Int. Cl.: B62D 25/12, B62D 49/00, E05B 85/04, E05B 35/00, E05B 83/24, E05B 83/42, E05B 15/04

(54) **WORKING VEHICLE**
NUTZFAHRZEUG
VÉHICULE DE TRAVAIL

(30) Priority: 11.10.2017 JP 2017197856
(43) Date of publication of application: 17.04.2019
(73) Proprietor: Iseki & Co., Ltd., Matsuyama-shi, Ehime 799-2692 (JP)
(72) Inventor: HISAOKA, Yasuhiro, Tobe-cho, Iyo-gun, Ehime 791-2193 (JP)
(74) Representative: Spengler, Robert

(56) References cited:
- WO-A1-2011/080156
- JP-A- H05 139 339
- JP-A- 2012 183 956
- JP-U- S 579 682

## Description

### BACKGROUND OF THE INVENTION

### Field of the Invention

The present invention relates to a working vehicle such as an agricultural tractor or the like.

### Related Art of the Invention

Known is a working vehicle for which an operation to release a lock of the bonnet can be readily performed with a lever (for example, refer to Japanese Patent Application Publication No. Hei 5-139339).
Document JP S57 9682 U discloses a working vehicle according to the preamble of claim 1.

### SUMMARY OF THE INVENTION

However, in the conventional working vehicle described above, danger accompanying an unintentional opening of the bonnet exists.

A purpose of the present invention is, in consideration of the conventional problem described above, to furnish a working vehicle for which danger accompanying an unintentional opening of the bonnet can be reduced.

The 1^{st} aspect of the present invention is a working vehicle, comprising: an openable-and-closable bonnet (70), which covers an engine room (60); a bonnet fixer (100) provided in the engine room (60), which possesses an elastic member (200) for locking the closed bonnet (70); and a lock member (80) provided on an inner wall of the bonnet (70), which engages with the bonnet fixer (100), characterized in that a jig inserting hole (71), into which a jig (400) is inserted, is provided to the bonnet (70) and the jig (400) inserted into the jig inserting hole (71) abuts onto the elastic member (200), and thereby an operation to release a lock of the closed bonnet (70) is performed.

By means of this, since the jig (400) inserted into the jig inserting hole (71) abuts onto the elastic member (200), and thereby an operation to release a lock of the closed bonnet (70) is performed, danger accompanying an unintentional opening of the bonnet (70) can be reduced.

The 2^{nd} aspect of the present invention is the working vehicle according to the 1^{st} aspect of the present invention, wherein the lock member (80) possesses an engaging part (81), and the elastic member (200) is a plate spring member (200) which possesses a bent part (210) with which the engaging part (81) engages and an abutting part (220) onto which the jig (400), inserted into the jig inserting hole (71), abuts.

By means of this, since the elastic member (200) is a plate spring member (200), a simple configuration can be realized.

The 3^{rd} aspect of the present invention is the working vehicle according to the 2^{nd} aspect of the present invention, wherein the lock member (80) possesses a guiding part (82) which guides the jig (400) so that the jig (400), inserted into the jig inserting hole (71), abuts onto the abutting part (220) and the guiding part (82) is positioned between the jig inserting hole (71) and the abutting part (220), and thereby guides the jig (400).

By means of this, since the lock member (80) possesses a guiding part (82) which guides the jig (400), an operation to release a lock of the closed bonnet (70) can be readily performed.

The 4^{th} aspect of the present invention is the working vehicle according to the 2^{nd} or 3^{rd} aspect of the present invention, wherein at a time when the bonnet (70) is going to be closed, the engaging part (81) moves while pushing the elastic member (200) against elastic force of the elastic member (200).

By means of this, the bonnet (70) which is going to be closed moves smoothly.

The 5^{th} aspect of the present invention is the working vehicle according to the 4^{th} aspect of the present invention, wherein to the bonnet (70), a bonnet spring (72) is provided, at a time when the bonnet (70) is going to be closed, the engaging part (81) downwardly moves, and when the bonnet (70) is closed, then a posture of the plate spring member (200) which has been pushed returns to an original posture, the engaging part (81) engages with the bent part (210), and the bonnet (70) is upwardly pushed by energizing force of the bonnet spring (72).

By means of this, the closed bonnet (70) is less prone to move.

By the present invention, a working vehicle for which danger accompanying an unintentional opening of the bonnet is able to be reduced can be furnished.

### BRIEF DESCRIPTION OF THE DRAWINGS

FIG. 1 is a schematic left side view of the agricultural tractor of the embodiment in the present invention;
FIG. 2 is a partial perspective view of the neighborhood of the bonnet of the agricultural tractor of the embodiment in the present invention;
FIG. 3 is a partial rear view of the neighborhood of the bonnet of the agricultural tractor of the embodiment in the present invention;
FIG. 4 is a schematic partial section view of the neighborhood of the bonnet of the agricultural tractor of the embodiment in the present invention;
FIG. 5 is a schematic partial rear view of the neighborhood of the lock member of the agricultural tractor of the embodiment in the present invention;
FIG. 6 is a schematic partial top view of the neighborhood of the lock member of the agricultural tractor of the embodiment in the present invention;
FIG. 7 is a partial perspective view (No. 1) of the neighborhood of the baseplate member of the agricultural tractor of the embodiment in the present invention;
FIG. 8 is a partial perspective view (No. 2) of the neighborhood of the baseplate member of the agricultural tractor of the embodiment in the present invention;
FIG. 9 is a schematic partial section view (No. 1) of the neighborhood of the bonnet fixer of the agricultural tractor of the embodiment in the present invention;
FIG. 10 is a schematic partial section view (No. 2) of the neighborhood of the bonnet fixer of the agricultural tractor of the embodiment in the present invention; and
FIG. 11 is a schematic partial section view of the neighborhood of the bonnet fixer of the agricultural tractor of another embodiment in the present invention.

### Description of the Reference Numerals

- 10: vehicle-body
- 11: 3-point link mechanism
- 20: driving unit
- 21: driving seat
- 22: floor
- 23: steering wheel
- 30: engine
- 31: fuel tank
- 40: front-wheel
- 50: rear-wheel
- 60: engine room
- 61: baseplate member
- 62: bonnet fixer attaching base-part
- 63: bonnet fixer attaching base-part hole
- 70: bonnet
- 70a: bonnet main-body part
- 70b: front light part
- 70c: front grille part
- 70d: bonnet attaching part
- 70e: circular-cylinder part
- 71: jig inserting hole
- 72: bonnet spring
- 73: bonnet spring attaching part
- 74: bonnet spring attaching bolt
- 75: bonnet spring attaching nut
- 76: bonnet spring cap
- 77: front light
- 78: front grille
- 80: lock member
- 81: engaging part
- 82: guiding part
- 83: jig guiding hole
- 84: jig inducing member
- 91: lock member bolt
- 100: bonnet fixer
- 200: plate spring member
- 210: bent part
- 220: abutting part
- 230: attaching part
- 231: attaching part hole
- 310: bonnet fixer attaching bolt
- 320: bonnet fixer attaching nut
- 400: jig
- 500: battery
- 510: battery rod
- 520: battery stopper
- 530: battery cable
- 540: assembling pad
- 550: harness clamp

### DESCRIPTION OF THE EMBODIMENTS

In the following, referring to the drawings, descriptions are given in detail regarding embodiments in the present invention.

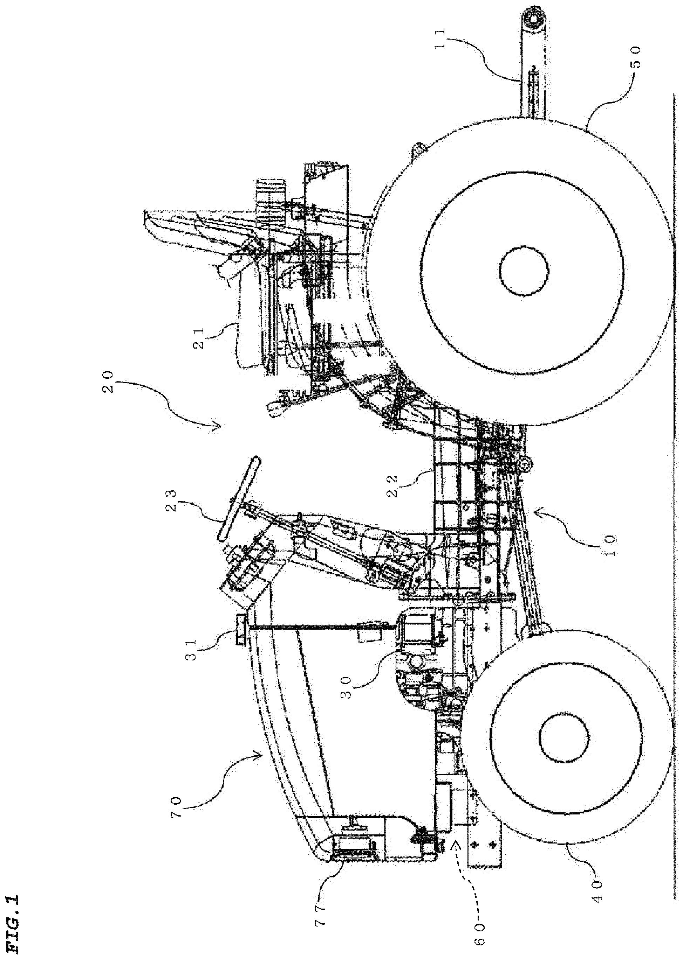

In the beginning, mainly referring to FIGs. 1 to 6, descriptions are specifically given regarding the configuration and action of an agricultural tractor of the present embodiment which is one example of the working vehicle in the present invention.

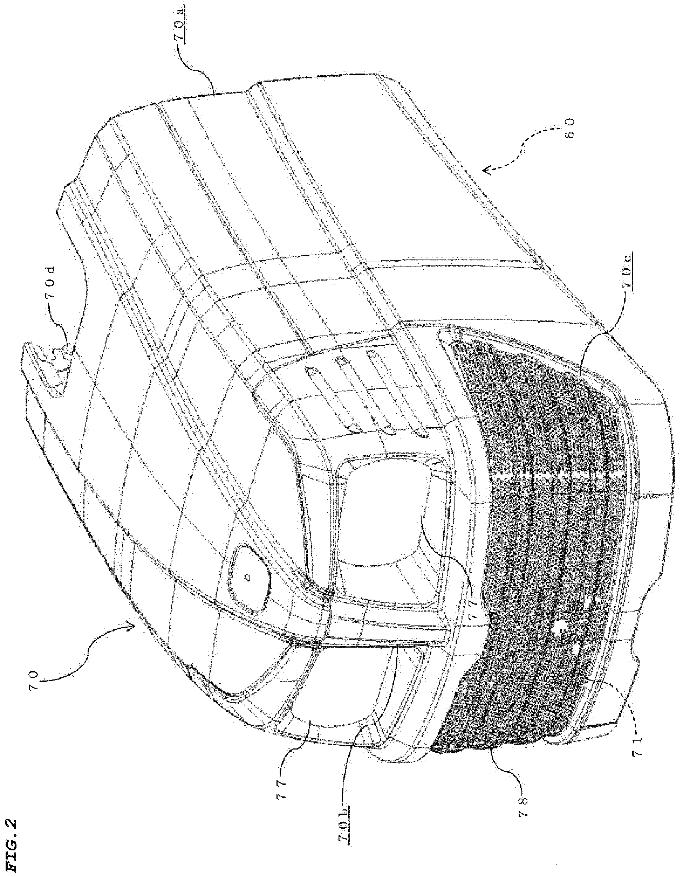

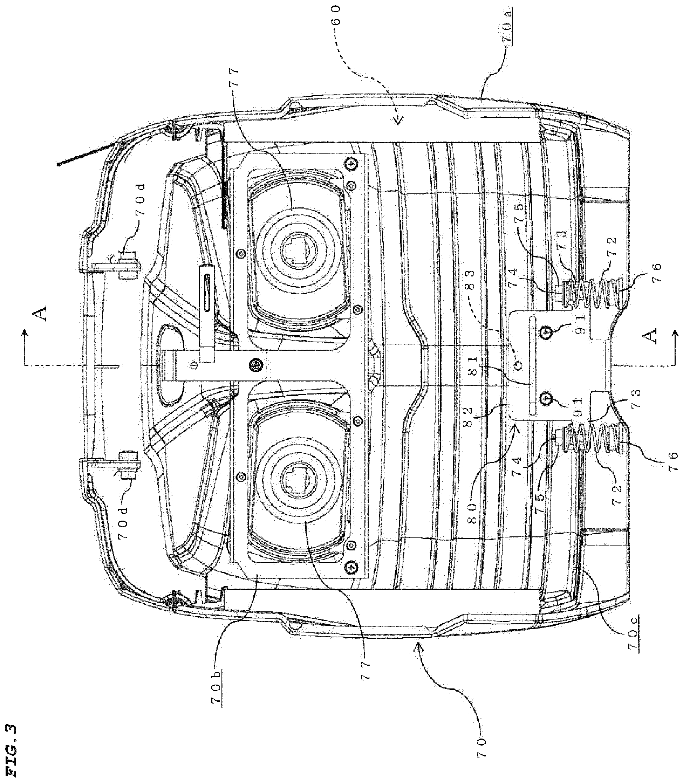

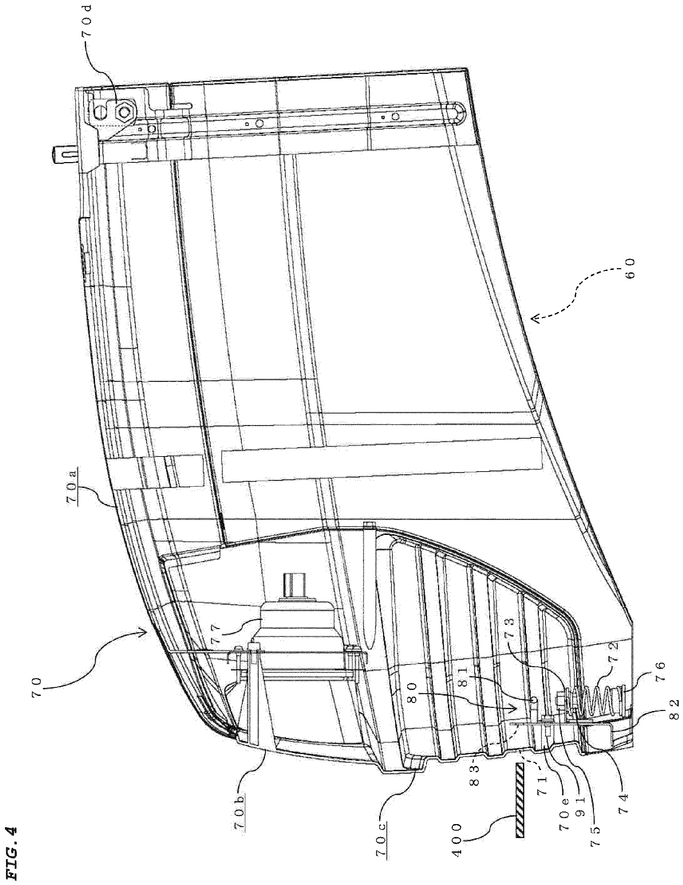

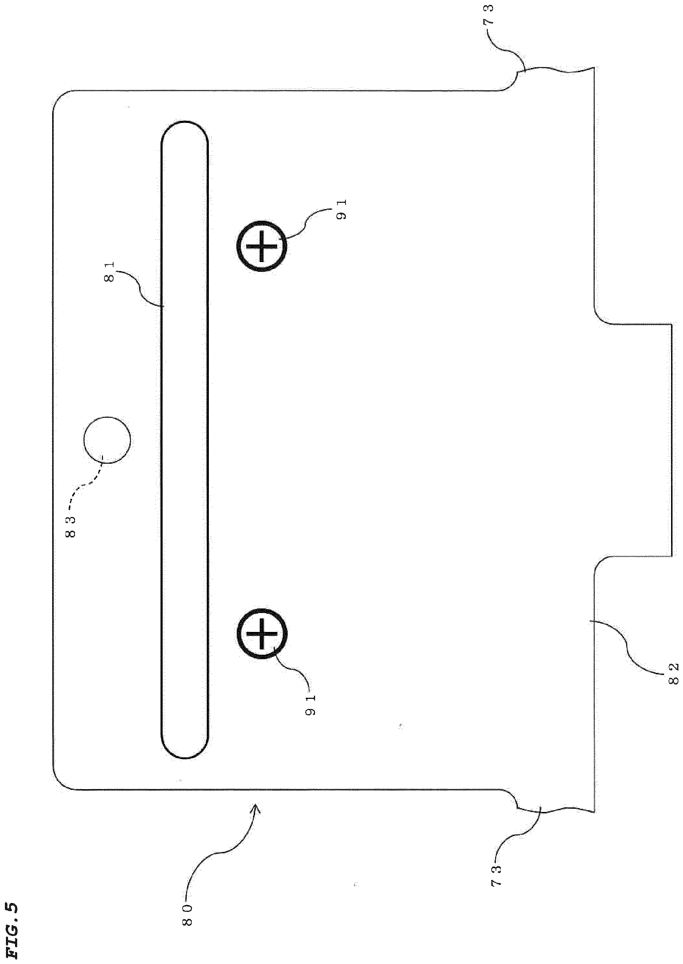

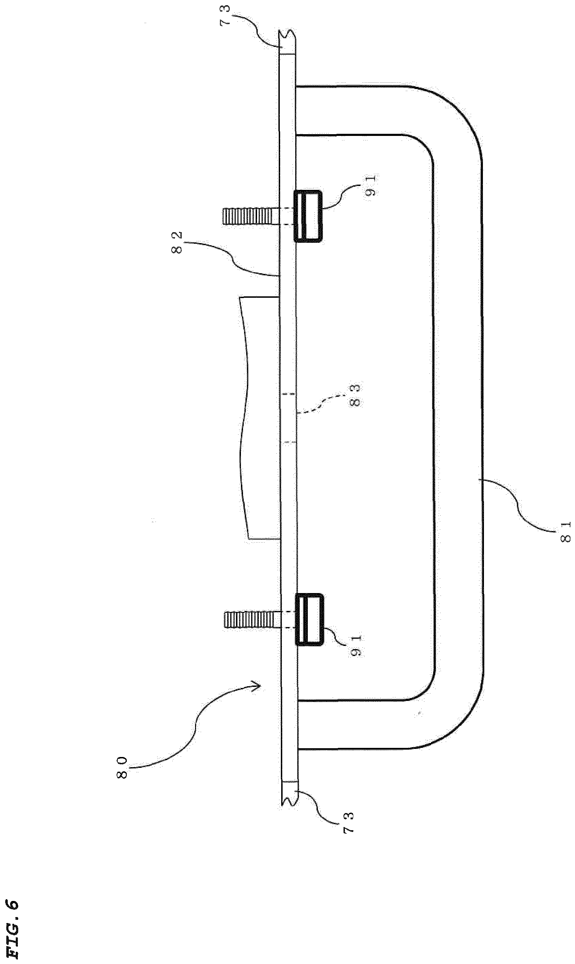

Here, FIG. 1 is a schematic left side view of the agricultural tractor of the embodiment in the present invention, FIG. 2 is a partial perspective view of the neighborhood of a bonnet 70 of the agricultural tractor of the embodiment in the present invention, FIG. 3 is a partial rear view of the neighborhood of the bonnet 70 of the agricultural tractor of the embodiment in the present invention, FIG. 4 is a schematic partial A-A section view of the neighborhood of the bonnet 70 of the agricultural tractor of the embodiment in the present invention, FIG. 5 is a schematic partial rear view of the neighborhood of a lock member 80 of the agricultural tractor of the embodiment in the present invention, and FIG. 6 is a schematic partial top view of the neighborhood of the lock member 80 of the agricultural tractor of the embodiment in the present invention.

The agricultural tractor of the present embodiment is, in FIG. 2, viewed from a left upper front side.

In FIG. 4, the state where a jig 400 is going to be inserted into a jig inserting hole 71 is shown.

Several configuration elements are sometimes not shown in the drawings and are sometimes shown with omission; the same shall apply hereinafter. For example, in FIGs. 1, 3 and 4, a front grille 78 is not shown, so that the configurations of a bonnet fixer 100 and the like will become easier to understand.

What is described in the first place is the fundamental configuration and action of the agricultural tractor of the present embodiment. Hence, regarding the configuration and action and the like which are related to the bonnet fixer 100, descriptions are later given in detail.

In an engine room 60 which is the inside of the bonnet 70 of the front part of a vehicle-body 10, a fuel tank 31, a muffler, a radiator and the like are provided, together with an engine 30 which is made to start up utilizing an ignition key being a main key.

Rotary motive force of the engine 30 is transmitted via an HST (Hydro Static Transmission) to a speed-changing device inside the transmission case provided below a floor 22 of a driving unit 20. And, the rotary motive force with speed-decreasing having been carried out at the speed-changing device is transmitted to a left-and-right pair of front-wheels 40, a left-and-right pair of rear-wheels 50, and the like.

In the driving unit 20 behind the engine 30, a steering wheel 23, a frontward/rearward movement lever and the like are provided. Behind the steering wheel 23, a driving seat 21 is provided. The hose cover covers hoses which are joined to the steering wheel 23. On the floor 22 at the left side of the operation column cover, a clutch pedal and the like are arranged. On the floor 22 at the right side of the operation column cover, a left brake pedal and a right brake pedal, an accelerator pedal, and the like are arranged.

To the rear part of the vehicle-body 10, a 3-point link mechanism 11 in which a working machine is installed is provided.

Next, mainly referring to FIGs. 2 to 8, descriptions are more specifically given regarding the configuration and action of the agricultural tractor of the present embodiment.

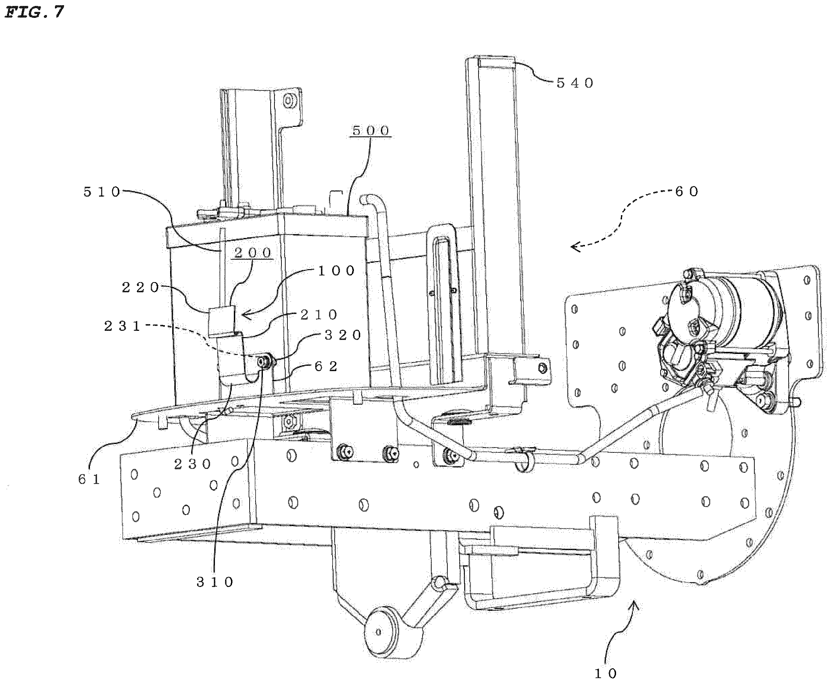

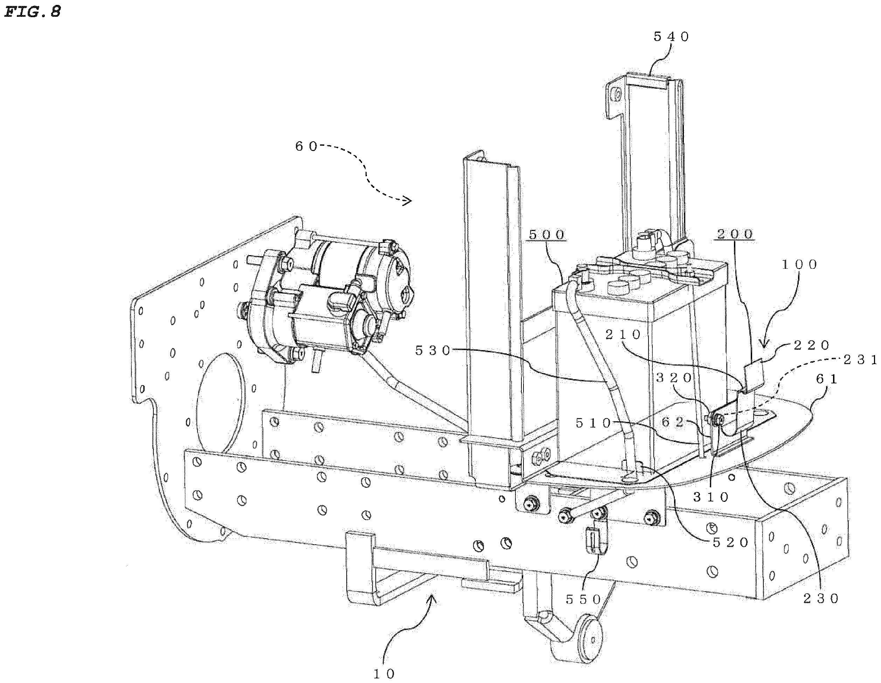

Here, FIGs. 7 and 8 are partial perspective views (Nos. 1 and 2) of the neighborhood of a baseplate member 61 of the agricultural tractor of the embodiment in the present invention.

The agricultural tractor of the present embodiment is viewed from a left lower front side in FIG. 7, and is viewed from a right upper front side in FIG. 8.

The bonnet 70 is an openable-and-closable bonnet, which covers the engine room 60.

A bonnet main-body part 70a is, so as to conform to a hood front-opening style, rotatably attached to the vehicle-body 10 with a left-and-right pair of bonnet attaching parts 70d behind the engine room 60. Not only a front grille part 70c for the front grille 78 which is for engine-cooling ventilation, but a front light part 70b for a left-and-right pair of front lights 77 which are for lighting is integrated with the bonnet main-body part 70a.

The bonnet fixer 100 is a fixer provided in the engine room 60, which possesses a plate spring member 200 for locking the closed bonnet 70.

The plate spring member 200 is one example of the elastic member in the present invention.

Since the elastic member is the plate spring member 200 which possesses a bent part 210 to be later described, a simple configuration can be realized.

The lock member 80 is a member provided on the inner wall of the bonnet 70, which engages with the bonnet fixer 100.

The assembling of the lock member 80 is performed in the state where the bonnet 70 descends to the lowermost position and is being closed.

To the bonnet 70, the jig inserting hole 71 into which a jig 400 is inserted is provided.

The jig 400 inserted into the jig inserting hole 71 abuts onto the plate spring member 200, and thereby an operation to release a lock of the closed bonnet 70 is performed.

To the bonnet 70 the jig inserting hole 71 is provided and, since the jig 400 inserted into the jig inserting hole 71 abuts onto the plate spring member 200, and thereby an operation to release a lock of the closed bonnet 70 is performed, danger accompanying an unintentional opening of the bonnet 70 can be reduced.

And, a configuration like this is a configuration that satisfies the homologation being a new European certification regulation, which does not permit a style for which the bonnet 70 can be opened only with a finger without a jig.

Regarding the jig inserting hole 71, the lock member 80 and the bonnet fixer 100, descriptions are later given further.

The baseplate member 61 is a battery baseplate member to the upper face of which a battery 500 is attached together with the bonnet fixer 100.

A battery rod 510 is a rod which goes through a hole provided behind the plate spring member 200 which functions as a stopper plate.

A battery stopper 520 is a stopper with which a side face of the battery 500 engages.

The assembling of the lower end part of a battery cable 530 is performed utilizing a coat-preventing spot.

The assembling which utilizes an assembling pad 540 is performed only at the left side of the battery 500.

A co-fastening of a harness clamp 550 is performed utilizing the assembling of the baseplate member 61, so that the number of components does not increase.

Next, mainly referring to FIGs. 5 to 10, descriptions are still more specifically given regarding the configuration and action of the agricultural tractor of the present embodiment.

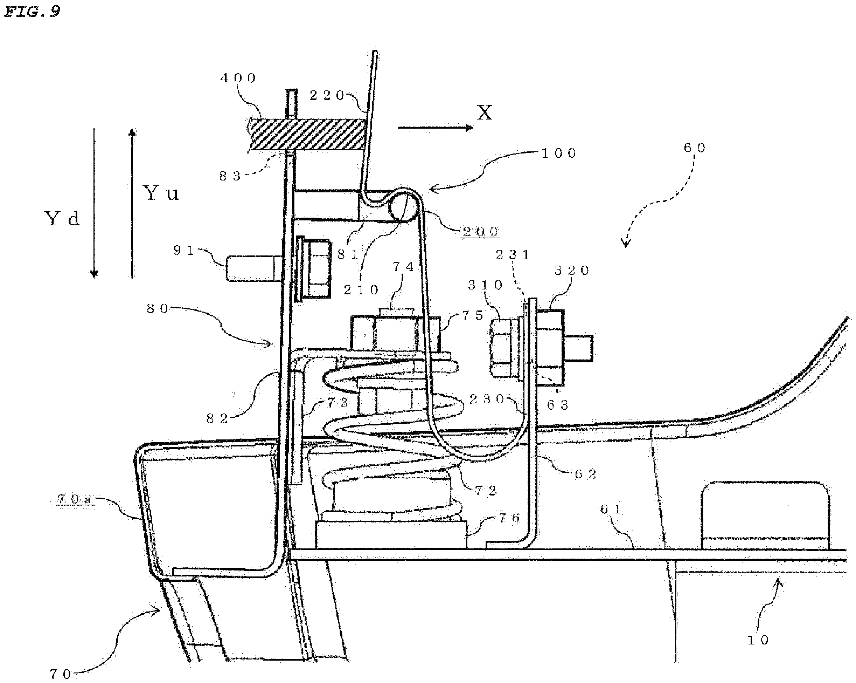

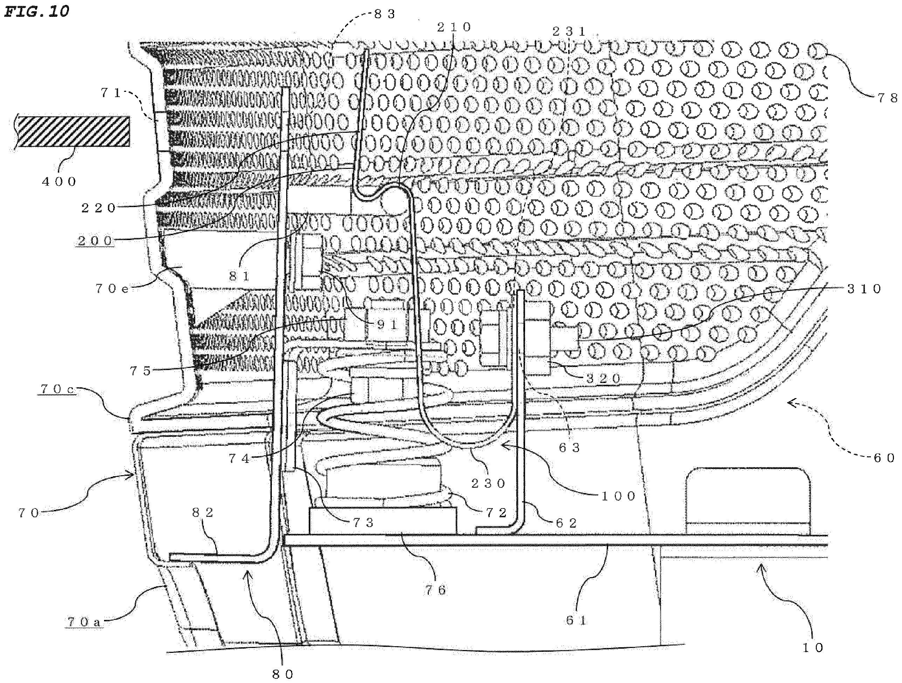

Here, FIGs. 9 and 10 are schematic partial A-A section views (Nos. 1 and 2) of the neighborhood of the bonnet fixer 100 of the agricultural tractor of the embodiment in the present invention.

In FIG. 9 the state where the jig 400 inserted into the jig inserting hole 71 is abutting onto the plate spring member 200 is shown, and in FIG. 10 the state where the jig 400 is going to be inserted into the jig inserting hole 71 is shown.

In FIG. 9, the front grille 78 is not shown, so that the configurations of the bonnet fixer 100 and the like will become easier to understand.

The jig inserting hole 71 is arranged in the front part of the bonnet 70.

As descriptions are later given further, the jig inserting hole 71 is provided to the lower part of the front grille part 70c as a penetrating hole.

Additionally, for example, the embodiment of a variant example is also conceived, where the jig inserting hole 71 is arranged in the left part or the right part of the bonnet 70.

The bonnet fixer 100 is attached to a bonnet fixer attaching base-part 62 which is provided standingly from the baseplate member 61 arranged at the lower side of the front part of the engine room 60.

As descriptions are later given further, the bonnet fixer 100 is provided to the front part of the upper face of the baseplate member 61, utilizing the plate spring member 200.

The flat and robust baseplate member 61 sufficiently frontwardly overhangs and, since the bonnet fixer attaching base-part 62 is firmly provided standingly from the baseplate member 61, the baseplate member 61 also functions as an attaching member to which the bonnet fixer 100 is attached.

Because of this, the number of components does not largely increase for the purpose of attaching the bonnet fixer 100.

The position where the bonnet fixer 100 is attached to the bonnet fixer attaching base-part 62 is adjustable.

The bonnet fixer 100 is attached to the bonnet fixer attaching base-part 62 which is provided standingly from the baseplate member 61 and, since the position where the bonnet fixer 100 is attached to the bonnet fixer attaching base-part 62 is adjustable, convenience can be improved.

The lower end part of the plate spring member 200 which the bonnet fixer 100 possesses is bent roughly in a U-shape, and forms an attaching part 230 for attaching the bonnet fixer 100 to the bonnet fixer attaching base-part 62. Since the lower end part of the plate spring member 200 is bent roughly in a U-shape, elastic force of the plate spring member 200 is sufficiently ensured.

The upper end part of the plate spring member 200 bent roughly in an L-shape forms an abutting part 220, and the middle part of the plate spring member 200 bent roughly in an inverted U-shape forms the bent part 210.

Regarding the bent part 210 and the abutting part 220, descriptions are later given further.

To the attaching part 230, a left-and-right pair of attaching part holes 231 is provided.

The bonnet fixer attaching base-part 62 is a flat-plate bent roughly in an L-shape, the lower end part of which is attached to the upper face of the baseplate member 61 utilizing welding.

To the bonnet fixer attaching base-part 62, a left-and-right pair of bonnet fixer attaching base-part holes 63 is provided.

The bonnet fixer 100 is attached to the flat part of the bonnet fixer attaching base-part 62 utilizing a left-and-right pair of bonnet fixer attaching bolts 310. The bonnet fixer attaching bolt 310 penetrates the attaching part hole 231 and the bonnet fixer attaching base-part hole 63. The tail part of the bonnet fixer attaching bolt 310 screws to a bonnet spring attaching nut 75.

The attaching part hole 231 is provided as a long-hole the longitudinal direction of which is the up-and-down direction so that, even in case the position of the closed bonnet 70 in the up-and-down direction slightly differs for each tractor, the up-and-down attaching position of the bonnet fixer 100 is adjustable.

Additionally, for example, the embodiment of a variant example is also conceived, where the attaching part hole 231 is provided as a long-hole the longitudinal direction of which is the left-and-right direction so that, even in case the position of the closed bonnet 70 in the left-and-right direction slightly differs for each tractor, the left-and-right attaching position of the bonnet fixer 100 is adjustable.

Moreover, for example, the embodiment of a variant example is also conceived, where the attaching part hole 231 is provided as a round-hole.

The bonnet fixer attaching base-part hole 63 is provided as a round-hole.

Additionally, for example, the embodiment of a variant example is also conceived, where the bonnet fixer attaching base-part hole 63 is provided as a long-hole the longitudinal direction of which is the up-and-down direction so that, even in case the position of the closed bonnet 70 in the up-and-down direction slightly differs for each tractor, the up-and-down attaching position of the bonnet fixer 100 is adjustable.

Moreover, for example, the embodiment of a variant example is also conceived, where the bonnet fixer attaching base-part hole 63 is provided as a long-hole the longitudinal direction of which is the left-and-right direction so that, even in case the position of the closed bonnet 70 in the left-and-right direction slightly differs for each tractor, the left-and-right attaching position of the bonnet fixer 100 is adjustable.

The lock member 80 possesses an engaging part 81.

The plate spring member 200 is a member which possesses the bent part 210 with which the engaging part 81 engages, and the abutting part 220 onto which the jig 400 inserted into the jig inserting hole 71 abuts.

As descriptions are later given further, the engaging part 81 provided to the lower part of the inner wall of the front grille part 70c as an engaging pin, at a time when the bonnet 70 is being closed, gets into the bent part 210 provided to the plate spring member 200 as a level-difference, and thereby the closed bonnet 70 is locked.

The lock member 80 possesses a guiding part 82 which guides the jig 400, so that the jig 400 inserted into the jig inserting hole 71 abuts onto the abutting part 220.

Since the lock member 80 possesses the guiding part 82 which guides the jig 400 so that the jig 400 abuts onto the abutting part 220, an operation to release a lock of the closed bonnet 70 can be readily performed.

Since the jig inserting hole 71 is arranged in the bonnet 70, and the lock member 80 which possesses the guiding part 82 is a member provided on the bonnet 70, the position-relationship between the jig inserting hole 71 and the guiding part 82, both of which are integrally formed with the bonnet 70, is fixed, and the lock member 80 can surely guide the jig 400 so that the jig 400 abuts onto the abutting part 220.

Additionally, for example, the embodiment of a variant example is also conceived, where the plate spring member 200 possesses the guiding part 82 which guides the jig 400.

The guiding part 82 is positioned between the jig inserting hole 71 and the abutting part 220, and thereby guides the jig 400.

The guiding part 82 is a flat-plate bent roughly in an L-shape, the front end part of which is attached to the front edge part of the bonnet main-body part 70a utilizing welding. To the rear end part of the guiding part 82, a jig guiding hole 83 which the jig 400 inserted into the jig inserting hole 71 penetrates straight is provided. Since the jig 400 penetrates the jig guiding hole 83 straight, the jig guiding hole 83 functions as a guide which guides the jig 400, so that the jig 400 inserted into the jig inserting hole 71 abuts onto the abutting part 220.

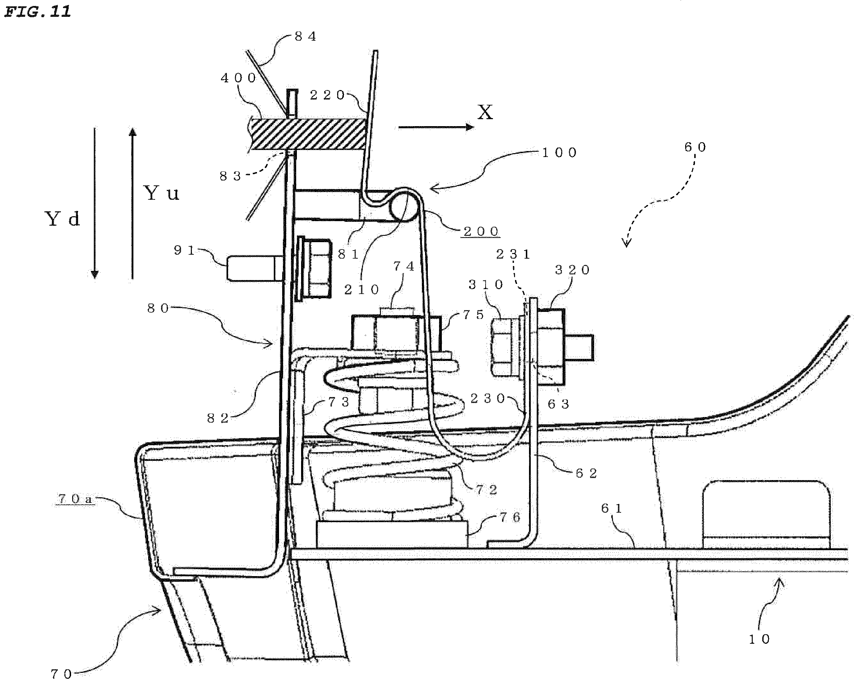

Additionally, as is shown in FIG. 11 which is a schematic partial A-A section view of the neighborhood of the bonnet fixer 100 of the agricultural tractor of another embodiment in the present invention, the embodiment of a variant example is also conceived, where a jig inducing member 84 formed roughly in a funnel-shape is attached at the inlet of the jig guiding hole 83 so that, even in case the jig 400 is not inserted into the jig inserting hole 71 straight, the induced jig 400 penetrates the jig guiding hole 83 straight.

The engaging part 81 is a round-stick bent roughly in a U-shape, both end parts of which are attached to the flat part of the guiding part 82 utilizing welding.

A left-and-right pair of lock member bolts 91 penetrates the flat part of the guiding part 82. The lock member bolt 91 screws to a screw-bore provided to a circular-cylinder part 70e integrally formed with the inner wall of the front grille part 70c, and fixes the flat part of the guiding part 82. The circular-cylinder part 70e functions as a spacer which ensures a space between the lock member 80 and the front grille part 70c.

To the bonnet 70, a left-and-right pair of bonnet springs 72 is provided.

The bonnet spring 72 is attached to the flat part of a bonnet spring attaching part 73 utilizing a bonnet spring attaching bolt 74. The bonnet spring attaching part 73 is a flat-plate bent roughly in an L-shape, which is integrally formed with the guiding part 82 utilizing a plate-bending process. The tail part of the bonnet spring attaching bolt 74 screws to a bonnet spring attaching nut 75.

To the free end part of the bonnet spring 72, a bonnet spring cap 76 is attached.

The bonnet spring cap 76, at a time when the bonnet 70 is being closed, abuts onto the upper face of the baseplate member 61.

More specifically, descriptions regarding the opening-and-closing of the bonnet 70 are given as follows.

In the beginning, descriptions are given regarding an operation to close the bonnet 70.

At a time when the bonnet 70 is going to be closed, the engaging part 81 of the bonnet 70 downwardly moves in the orientation shown with the arrow Yd, while rearwardly pushing the plate spring member 200 in the orientation shown with the arrow X against elastic force of the plate spring member 200.

Since the upper end part of the plate spring member 200 is inclined so as to rearwardly slant, the engaging part 81 of the bonnet 70 can rearwardly push the plate spring member 200 with ease, and the bonnet 70 downwardly moves smoothly.

When the bonnet 70 is closed, then the engaging part 81 of the bonnet 70 engages with the bent part 210 of the plate spring member 200, and the posture of the plate spring member 200, which has been rearwardly pushed, returns to the original posture.

At this time, the bonnet spring cap 76 is abutting onto the upper face of the baseplate member 61, and the bonnet 70 is upwardly pushed in the orientation shown with the arrow Yu by energizing force of the bonnet spring 72.

Thereupon, the engaging part 81 of the bonnet 70 firmly engages with the bent part 210 of the plate spring member 200, and the bonnet 70 does not move.

The flat and robust baseplate member 61 sufficiently frontwardly overhangs and, since the whole of the lower face of the bonnet spring cap 76 firmly abuts onto the upper face of the baseplate member 61, the baseplate member 61 also functions as an abutting member onto which the bonnet spring cap 76 abuts.

Because of this, an unintentional opening of the bonnet 70 due to vibration of the vehicle-body 10 and the like is suppressed without accompanying large increase of the number of components.

Next, descriptions are given regarding an operation to open the bonnet 70.

At a time when the bonnet 70 is going to be opened, the jig 400 inserted into the jig inserting hole 71 rearwardly pushes the plate spring member 200 in the orientation shown with the arrow X against elastic force of the plate spring member 200.

Since the upper end part of the plate spring member 200 forms the abutting part 220, the middle part of the plate spring member 200 forms the bent part 210, and the lower end part of the plate spring member 200 forms the attaching part 230, the jig 400 inserted into the jig inserting hole 71 can rearwardly push the plate spring member 200 with ease.

Also at this time, the bonnet spring cap 76 is abutting onto the upper face of the baseplate member 61, and the bonnet 70 is upwardly pushed in the orientation shown with the arrow Yu by energizing force of the bonnet spring 72.

Thereupon, the engaging part 81 of the bonnet 70 gets out of the bent part 210 of the plate spring member 200 with ease, and the bonnet 70 upwardly moves smoothly.

When the jig 400 inserted into the jig inserting hole 71 is took out from the jig inserting hole 71, then the posture of the plate spring member 200, which has been rearwardly pushed, returns to the original posture.

As described above, the flat and robust baseplate member 61 sufficiently frontwardly overhangs and, since the whole of the lower face of the bonnet spring cap 76 firmly abuts onto the upper face of the baseplate member 61, the baseplate member 61 also functions as an abutting member onto which the bonnet spring cap 76 abuts.

Because of this, an operation to open up the bonnet 70 is assisted without accompanying large increase of the number of components.

Of course, since the baseplate member 61 sufficiently frontwardly overhangs, a hand, a foot or the like, for opening up the bonnet 70 without the jig 400, cannot be from below inserted into a narrow gap between the baseplate member 61 and the bonnet 70.

Because of this, an improper operation to open up the bonnet 70 without the jig 400 is suppressed without accompanying increase of the number of components.

A working vehicle in the present invention, for which danger accompanying an unintentional opening of the bonnet can be reduced, is useful, for example, for the purpose of utilizing for a working vehicle such as an agricultural tractor or the like.

## Claims

1. A working vehicle, comprising:
an openable-and-closable bonnet (70), which covers an engine room (60);
a bonnet fixer (100) provided in the engine room (60), which possesses an elastic member (200) for locking the closed bonnet (70); and
a lock member (80) provided on an inner wall of the bonnet (70), which engages with the bonnet fixer (100),
**characterized in that**
a jig inserting hole (71), into which a jig (400) is inserted, is provided to the bonnet (70) and
the jig (400) inserted into the jig inserting hole (71) abuts onto the elastic member (200), and thereby an operation to release a lock of the closed bonnet (70) is performed.

2. The working vehicle according to claim 1, wherein
the lock member (80) possesses an engaging part (81), and
the elastic member (200) is a plate spring member (200) which possesses a bent part (210) with which the engaging part (81) engages and an abutting part (220) onto which the jig (400), inserted into the jig inserting hole (71), abuts.

3. The working vehicle according to claim 2, wherein
the lock member (80) possesses a guiding part (82) which guides the jig (400) so that the jig (400), inserted into the jig inserting hole (71), abuts onto the abutting part (220) and
the guiding part (82) is positioned between the jig inserting hole (71) and the abutting part (220), and thereby guides the jig (400).

4. The working vehicle according to claim 2 or 3, wherein
at a time when the bonnet (70) is going to be closed, the engaging part (81) moves while pushing the elastic member (200) against elastic force of the elastic member (200).

5. The working vehicle according to claim 4, wherein
to the bonnet (70), a bonnet spring (72) is provided,
at a time when the bonnet (70) is going to be closed, the engaging part (81) downwardly moves, and
when the bonnet (70) is closed, then a posture of the plate spring member (200) which has been pushed returns to an original posture, the engaging part (81) engages with the bent part (210), and the bonnet (70) is upwardly pushed by energizing force of the bonnet spring (72).

## Patentansprüche

1. Nutzfahrzeug, umfassend:
eine zu öffnende und zu verschließende Haube (70), die einen Motorraum (60) abdeckt;
eine Haubenfixieranordnung (100), die im Motorraum (60) bereitgestellt ist, die ein elastisches Element (200) zum Verriegeln der geschlossenen Haube (70) aufweist,
ein Verriegelungselement (80), das auf einer inneren Wand der Haube (70) bereitgestellt ist, das mit der Haubenfixieranordnung (100) eingreift,
**dadurch gekennzeichnet, dass**
ein Vorrichtungseinführungsloch (71), in das eine Vorrichtung (400) eingeführt wird, in der Haube (70) bereitgestellt ist, und
die Vorrichtung (400), die in das Vorrichtungseinführungsloch (71) eingeführt ist, an das elastische Element (200) anschlägt, und
dadurch eine Betätigung zur Freigabe einer Verriegelung der geschlossenen Haube (70) durchgeführt wird.

2. Nutzfahrzeug nach Anspruch 1, wobei
das Verriegelungselement (80) einen Eingriffsteil (81) aufweist, und
das elastische Element (200) ein Tellerfederelement (200) ist, das einen gebogenen Abschnitt (210) aufweist, mit dem der Eingriffsteil (81) eingreift, und einen Anschlagteil (220), an den die Vorrichtung (400), die in das Vorrichtungseinführungsloch (71) eingeführt wird, anschlägt.

3. Nutzfahrzeug nach Anspruch 2, wobei
das Verriegelungselement (80) einen Führungsteil (82) aufweist, der die Vorrichtung (400) führt, so dass die Vorrichtung (400), die in das Vorrichtungseinführungsloch (71) eingeführt wird, an den Anschlagteil (220) anschlägt.
der Führungsteil (82) zwischen dem Vorrichtungseinführungsloch (71) und dem Anschlagloch (220) positioniert ist und dadurch die Vorrichtung (400) führt.

4. Nutzfahrzeug nach Anspruch 2 oder 3, wobei
zu einem Zeitpunkt, an dem die Haube (70) geschlossen wird, sich der Eingriffsteil (81) bewegt, während das elastische Element (200) gegen eine elastische Kraft des elastischen Elements (200) geschoben wird.

5. Nutzfahrzeug nach Anspruch 4, wobei der Haube (70) eine Haubenfeder (72) bereitgestellt wird,
zu einem Zeitpunkt, an dem die Haube (70) geschlossen wird, sich der Eingriffsteil (81) nach unten bewegt, und,
wenn die Haube (70) geschlossen ist, eine Stellung des Tellerfederelements (200), die geschoben wurde, in eine ursprüngliche Stellung zurückkehrt, der Eingriffsteil (81) mit dem gebogenen Teil (210) eingreift und die Haube (70) durch die Betätigungskraft der Haubenfeder (72) nach oben geschoben wird.

## Revendications

1. Véhicule de travail comprenant :
un capot pouvant s'ouvrir et se fermer (70) qui recouvre un compartiment moteur (60) ;
un dispositif de fixation de capot (100) prévu dans le compartiment moteur (60) qui possède un élément élastique (200) pour verrouiller le capot (70) fermé ; et
un élément de verrouillage (80) prévu sur une paroi interne du capot (70) qui se met en prise avec le dispositif de fixation de capot (100),
**caractérisé en ce que** :
un trou d'insertion de dispositif de serrage (71), dans lequel un dispositif de serrage (400) est inséré, est prévu sur le capot (70) et le dispositif de serrage (400) inséré dans le trou d'insertion de dispositif de serrage (71) vient en butée sur l'élément élastique (200) et ainsi une opération pour libérer un verrou du capot (70) fermé est réalisée.

2. Véhicule de travail selon la revendication 1, dans lequel :
l'élément de verrou (80) possède une partie de mise en prise (81), et
l'élément élastique (200) est un élément de ressort à lames (200) qui possède une partie pliée (210) avec laquelle la partie de mise en prise (81) se met en prise et une partie de butée (220) sur laquelle le dispositif de serrage (400), inséré dans le trou d'insertion de dispositif de serrage (71), vient en butée.

3. Véhicule de travail selon la revendication 2, dans lequel :
l'élément de verrouillage (80) possède une partie de guidage (82) qui guide le dispositif de serrage (400) de sorte que le dispositif de serrage (400), inséré dans le trou d'insertion de dispositif de serrage (71), vient en butée sur la partie de butée (220), et
la partie de guidage (82) est positionnée entre le trou d'insertion de dispositif de serrage (71) et la partie de butée (220) et ainsi guide de dispositif de serrage (400).

4. Véhicule de travail selon la revendication 2 ou 3, dans lequel :
au moment où le capot (70) va être fermé, la partie de mise en prise (81) se déplace tout en poussant l'élément élastique (200) contre la force élastique de l'élément élastique (200).

5. Véhicule de travail selon la revendication 4, dans lequel :
on prévoit un ressort de capot (72) sur le capot (70),
au moment où le capot (70) va être fermé, la partie de mise en prise (81) se déplace vers le bas, et
lorsque le capot (70) est fermé, alors une posture de l'élément de ressort à lames (200) qui a été poussé, revient à une posture d'origine, la partie de mise en prise (81) se met en prise avec la partie pliée (210), et le capot (70) est poussé vers le haut par la force dynamique du ressort de capot (72) .
